# FASCICULE DE BREVET EUROPEEN

(11) **EP 1 095 706 B1**
(45) Date de publication et mention de la délivrance du brevet: **02.01.2004**
(21) Numéro de dépôt: 00402706.6
(22) Date de dépôt: 02.10.2000
(51) Int. Cl.: B05B 11/00, B65D 1/32

(54) **Flacon doseur à pompe**
Flasche mit Dosiervorrichtung und Pumpe
Dosing bottle with pump

(30) Priorité: 06.10.1999 FR 9912435
(43) Date de publication de la demande: 02.05.2001
(73) Titulaire: L'OREAL, 75008 Paris (FR)
(72) Inventeur: De Laforcade Vincent, 78120 Rambouillet (FR)
(74) Mandataire: Dossmann, Gérard

(56) Documents cités:
- FR-A- 2 643 045
- US-A- 5 279 450
- US-A- 5 476 198

## Description

La présente invention concerne le domaine des flacons doseurs, de type destiné à contenir un produit liquide et munis de dispositif permettant de doser les quantités de liquide devant être distribuées.

Le document US 5 476 198 décrit une pompe de distribution montée sur un réceptacle de liquide. Un élément de retenue de liquide communique avec un orifice d'entrée de la pompe et avec le réceptacle et est adapté pour recevoir un certain volume de liquide lorsque le dispositif est agité ou basculé par rapport à une position verticale dans laquelle la pompe est au sommet du réceptacle et pour retenir le volume de liquide en communication avec l'orifice d'entrée de la pompe lorsque le dispositif est de nouveau en position verticale. En position verticale, l'élément de retenue du liquide est fixé à une extrémité inférieure de la pompe et disposé au-dessus de la surface libre du liquide contenu dans le réceptacle.

On connaît par le document FR-A-2 643 045 un flacon doseur comportant, d'une part un récipient destiné à contenir un produit liquide, le récipient étant surmonté par un goulot, et d'autre part une chambre de dosage communiquant avec le récipient. Le fond de la chambre de dosage comporte une ouverture reliée à un tube plongeur disposé dans le récipient. L'ouverture est munie d'un clapet anti-retour pouvant s'ouvrir vers l'intérieur de la chambre sous l'effet d'une pression s'exerçant de l'intérieur du récipient vers ladite chambre. L'extrémité de la chambre opposée au fond est ouverte et associée à un organe obturateur. Le volume de la chambre est variable, les parois latérales de celle-ci étant constituées par un soufflet. L'extrémité de la chambre opposée au fond aboutit en position dépliée de la chambre à l'intérieur du goulot.

Le fonctionnement de ce dispositif est satisfaisant. Toutefois, il est relativement onéreux en raison de la présence du clapet et du soufflet et il ne permet pas une utilisation et une répartition progressives du produit contenu dans le soufflet car, après ouverture, le soufflet se trouve à l'air libre avec sa face supérieure ouverte. L'utilisateur risque donc de mal répartir le produit liquide sur l'endroit où il doit être déposé, voire même d'en faire tomber une partie, ce qui risque de provoquer des taches sur les vêtements de l'utilisateur et faire perdre tout intérêt à l'opération précédente de dosage.

On connaît également des flacons dont la contenance est égale à la dose de produit devant être utilisée à chaque mise en oeuvre et pourvus d'un goulot sur lequel est montée une pompe axiale à bouton-poussoir permettant une répartition progressive du produit, chaque poussée sur le bouton provoquant le pompage d'une fraction de la dose. Ce type dé flacon est satisfaisant en terme de précision du dosage du produit, mais soit est onéreux si l'on prévoit une pompe par flacon-dose; soit est d'utilisation peu pratique si l'on doit transférer une pompe à un nouveau flacon que l'on aura préalablement ouvert, avant chaque utilisation.

On connaît encore des flacons de capacité plus importante dont la contenance correspond à plusieurs doses et également pourvus d'une pompe axiale à bouton-poussoir qui est capable de délivrer à chaque poussée une petite fraction de la dose. Dans ce cas, l'utilisateur doit compter le nombre de poussées à effectuer sur le bouton pour parvenir à la dose, d'où un risque d'erreur très important.

La présente invention a pour objet de remédier aux inconvénients des dispositifs décrits ci-dessus.

La présente invention a pour objet l'ensemble comprenant un récipient, un moyen de dosage et un moyen de projection d'une fraction de la dose.

Le dispositif, selon l'invention, sert au stockage et à la distribution de liquide et comprend un premier récipient d'une première contenance, un deuxième récipient d'une deuxième contenance inférieure à la première et comprenant une portion inférieure distante d'une paroi de fond du premier récipient, un moyen de transfert du liquide du premier récipient vers le deuxième récipient, et une pompe en communication avec le deuxième récipient pour prélèvement d'une quantité déterminée de liquide dans le dit deuxième récipient et distribution à l'extérieur.

Le premier récipient peut être apte, notamment en réponse à une pression exercée sur la paroi du premier récipient, à passer d'un volume maximum à un volume minimum, la surpression générée par la réduction du volume correspondant provoquant le transfert du liquide du premier récipient vers le second récipient.

Ladite deuxième contenance est déterminée par la disposition des parois du deuxième récipient, et le moyen apte à transférer du liquide du premier récipient vers le deuxième récipient est un moyen apte à transférer du liquide du premier récipient vers le deuxième récipient en position tête en haut.

Avantageusement, la pompe comprend un bouton-poussoir dont l'actionnement entraîne le pompage de la dite quantité déterminée de liquide.

Avantageusement, le premier récipient comprend un goulot, le deuxième récipient étant monté axialement sur ledit goulot.

Dans un mode de réalisation de l'invention, le moyen de transfert comprend un tube s'étendant depuis le fond du premier récipient jusqu'à un niveau donné dudit deuxième récipient, déterminant la deuxième contenance, le surplus de liquide contenu dans le deuxième récipient pouvant s'écouler par le tube vers le premier récipient.

Dans un mode de réalisation de l'invention, le dispositif comprend une pièce intermédiaire disposée entre le deuxième récipient et la pompe, de façon que le deuxième récipient et la pompe soient coaxiaux.

La pièce intermédiaire peut comprendre une canalisation en trois portions, une première portion dont l'extrémité libre débouche dans le fond du deuxième récipient, la première portion traversant le deuxième récipient et étant décalée par rapport à l'axe de la dite pièce et du deuxième récipient, une deuxième portion radiale en communication avec une troisième portion, coaxiale avec la pompe et le deuxième récipient et dans laquelle est emmanché un tube-collecteur de la pompe.

Dans un mode de réalisation de l'invention, la deuxième portion radiale s'étend au voisinage d'une extrémité du deuxième récipient opposée audit fond.

Avantageusement, la deuxième portion radiale est ouverte à son extrémité opposée à la troisième portion.

Ainsi, l'utilisateur en pressant sur le récipient, provoque un transfert de produit liquide contenu dans ledit récipient vers le moyen de dosage formé par le deuxième récipient. Après relâchement de la pression exercée sur le premier récipient, si le niveau du liquide transféré dans le deuxième récipient est supérieur à celui de l'orifice du tube, la partie de liquide située entre ces deux niveaux redescend par le tube dans le premier récipient. Il reste alors dans le deuxième récipient une quantité déterminée de liquide qui est progressivement pompée à chaque action de l'utilisateur sur la pompe.

A titre d'exemple, on pourra prévoir un premier récipient d'une contenance de l'ordre de quelques dizaines à quelques centaines de cm³, un second récipient d'une contenance de l'ordre de quelques cm³ et une pompe prélevant quelques dixièmes de cm³ à chaque action de l'utilisateur. La quantité délivrée à chaque action sur la pompe est très faible de sorte qu'on réduit fortement le risque de formation de gouttes du liquide risquant de tomber sur les vêtements, par exemple dans le cas d'un produit capillaire. En condition normale d'utilisation, l'utilisateur n'utilise à chaque fois qu'une dose égale à la contenance du deuxième récipient qui ne débouche pas directement à l'air libre, de sorte qu'on évite les risques de renversement d'une partie de la dose et qu'on utilise une quantité connue à chaque fois ce qui est important dans le cas des produits de traitement, notamment capillaires.

Le dispositif est économique, car le premier récipient et la pompe sont des éléments standards. Le deuxième récipient et la pièce intermédiaire sont réalisés en matériau synthétique moulé dont la fabrication en grande série est peu onéreuse. Une pompe unique permet la mise en oeuvre d'une quantité de produit égale à au moins une ou plusieurs dizaines de doses.

Enfin, le dispositif est ergonomique et compact dans la mesure où tous les éléments sont disposés sur un axe unique qui est l'axe du goulot du premier récipient. L'encombrement axial est réduit grâce à la pièce intermédiaire qui permet de décaler la première portion axiale de la canalisation par rapport à l'axe commun aux autres éléments et de reprendre ainsi le liquide de la dose au fond du deuxième récipient.

La présente invention sera mieux comprise à l'étude de la description détaillée d'un mode de réalisation pris à titre d'exemple nullement limitatif et illustré par les dessins annexés, sur lesquels :
la figure 1 est une vue en coupe axiale du dispositif conforme à l'invention, la pompe étant toutefois représentée en vue de face en élévation pour la simplicité du dessin;
la figure 2 est une vue en coupe axiale de la pièce intermédiaire;
la figure 3 est une vue de face en élévation de la pièce intermédiaire;
la figure 4 est une vue en perspective de la pièce intermédiaire; et
la figure 5 est une vue de dessus en élévation de la pièce intermédiaire.

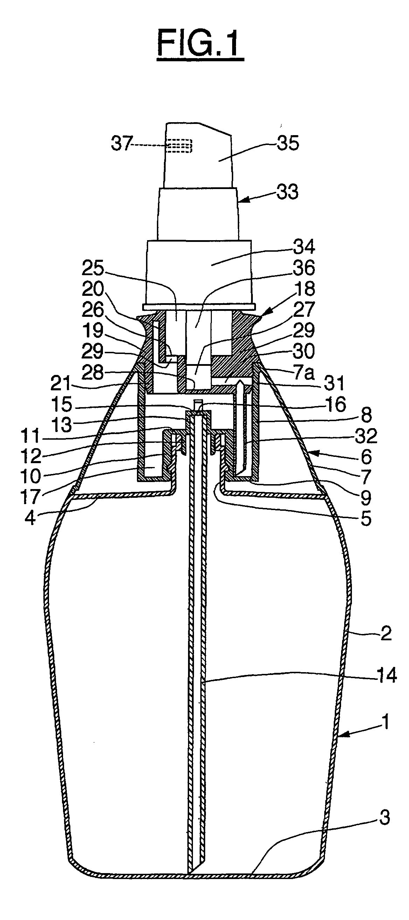

Comme on peut le voir sur la figure 1, le dispositif de stockage et de projection de liquide, ou flacon-doseur, conforme à l'invention, comprend un récipient 1 pourvu d'une paroi latérale 2, par exemple de forme cylindrique à section circulaire ou ovale ou encore de forme plus ou moins ovoïde, une paroi de fond 3 sensiblement plane pour permettre de poser le récipient 1 sur une surface plane non représentée, une paroi supérieure 4 et un goulot 5 formé au centre de la paroi supérieure 4 et orienté selon un axe perpendiculaire au plan de la paroi inférieure 3. Le goulot 5 est pourvu d'un filetage mâle.

Le dispositif comprend un second récipient 6 disposé sur le premier récipient 1 et pourvu d'une paroi latérale 7 située sensiblement dans le prolongement de la paroi latérale 2 et dont l'extrémité supérieure forme une surface plane 7a parallèle au plan de la paroi inférieure 3. Le second récipient 6 comprend encore une première portion cylindrique 8 de section circulaire, s'étendant vers le bas à partir de la surface supérieure 7a jusqu'à proximité de la paroi supérieure 4 du premier récipient 1. Une paroi radiale inférieure 9 annulaire s'étend vers l'intérieur à partir de l'extrémité inférieure de la première paroi cylindrique 8, jusqu'à une deuxième paroi cylindrique 10 dont l'alésage est pourvu d'un filetage femelle et qui est vissé sur le goulot 5 du premier récipient 1. La deuxième paroi cylindrique 10 s'étend axialement vers le haut à partir de la portion radiale inférieure 9 jusqu'à une portion radiale supérieure 11 annulaire s'étendant vers l'intérieur à partir de la deuxième portion cylindrique 10 et apte à entrer en contact avec l'extrémité supérieure du goulot 5.

Les premier et second récipients sont distincts et séparés par au moins une paroi. La contenance du second récipient est déterminée dès la fabrication par la disposition de ses parois.

Une jupe cylindrique 12 s'étend vers le bas à partir de la paroi radiale supérieure 11 et entre en contact avec un alésage du goulot 5 en vue de parfaire l'étanchéité entre le premier récipient 1 et le second récipient 6. Le second récipient 6 comprend en outre, une autre jupe cylindrique 13 s'étendant vers le haut à partir de la portion radiale supérieure 11 et dont elle forme la limite intérieure. Dans l'alésage de la jupe cylindrique 13, est emmanché un tube 14 s'étendant vers le bas à l'intérieur du premier récipient 1 jusqu'à proximité immédiate ou contact sans obturation avec la paroi inférieure 3. Une paroi radiale d'extrémité 15 percée d'un trou 16 se raccorde à l'extrémité supérieure de la jupe cylindrique 13 et permet le positionnement précis du tube 14 dans l'alésage de ladite jupe cylindrique 13.

Un espace circulaire 17 est formé par la première portion cylindrique 8, la portion radiale inférieure 9, la deuxième portion cylindrique intérieure 10, la portion radiale supérieure 11, la jupe cylindrique 13 et la paroi d'extrémité 15, cet espace étant ouvert vers le haut du côté de la surface supérieure 7a. Les portions 8, 9, 10 et 11, les jupes 12 et 13 et la paroi 15 sont coaxiales.

Le dispositif comprend encore une pièce intermédiaire 18 disposée sur le deuxième récipient 6. La pièce intermédiaire 18 est en contact avec la surface supérieure 7a de la paroi extérieure 7 et est emmanchée dans l'extrémité supérieure de l'alésage de la portion cylindrique 8.

La pièce intermédiaire 18 comprend une paroi extérieure 19 dont la surface extérieure se situe globalement dans le prolongement de la paroi extérieure 7 du deuxième récipient 6, et une paroi intérieure 20 de forme cylindrique. La paroi extérieure 19 présente des surfaces de révolution, notamment une surface intérieure cylindrique et comprend à son extrémité inférieure, une jupe cylindrique 21 pourvue sur sa surface extérieure d'un joint d'étanchéité 22 prévu pour coopérer avec l'alésage de l'extrémité supérieure de la portion cylindrique 8 du deuxième récipient 6. Le joint 22 est soit monobloc avec la jupe 21, soit distinct.

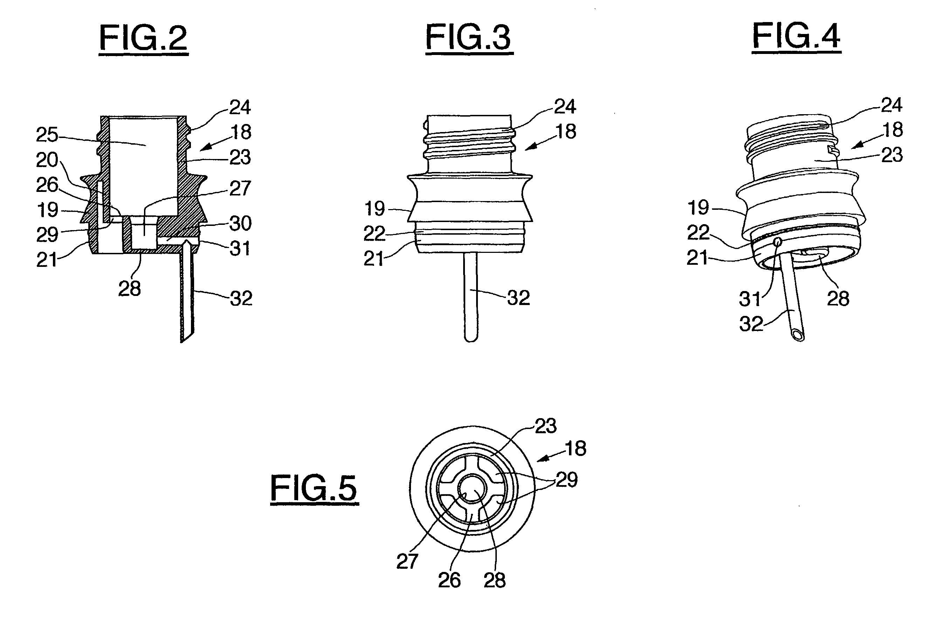

A leurs extrémités supérieures, les parois extérieure 19 et intérieure 20 se rejoignent et forment un goulot 23 visible sur les figures 2 à 4. Le goulot 23 est pourvu d'un filetage mâle 24. Le goulot 23 et la portion cylindrique intérieure 20 définissent un espace 25 limité par la surface intérieure cylindrique dudit goulot 23 et de ladite portion cylindrique intérieure 20, à son extrémité supérieure par l'orifice du goulot 23 et à son extrémité inférieure par une paroi radiale annulaire 26. La pièce intermédiaire 18 comprend également une portion cylindrique 27 qui s'étend vers le bas à partir du bord intérieur de la portion radiale 26 en formant une canalisation et dont l'extrémité inférieure est limitée et fermée par une paroi radiale 28. La paroi radiale 26 est percée d'au moins un trou traversant 29, visible sur la figure 5. Dans l'exemple illustré, il est prévu quatre trous 29 circonférentiellement régulièrement répartis. L'espace 25 de la pièce intermédiaire 18 est ainsi en communication directe avec l'espace 17 du deuxième récipient 6. La portion de fond 28 est sensiblement alignée avec l'extrémité inférieure de la jupe cylindrique 21 de la portion cylindrique extérieure 19.

On voit, sur les figures 1 et 2, que les parois cylindriques extérieure 19 et intérieure 20 sont liées entre elles sur un secteur angulaire limité par une portion de matière 29. Dans cette portion de matière 29 qui s'étend sur toute la longueur desdites portions cylindriques 19 et 20, est formée une canalisation 30 s'étendant radialement entre l'alésage de la portion cylindrique 27 et la surface extérieure de la jupe cylindrique 21.

A l'état monté illustré sur la figure 1, l'extrémité 31 de la canalisation 30 débouchant sur la surface extérieure de la jupe cylindrique 21 est obturée par la portion cylindrique 8 du deuxième récipient 6. Avant le montage, l'extrémité 31 de la canalisation 30 est ouverte, confer figure 4, ce qui facilite le démoulage de la pièce intermédiaire 18. La pièce intermédiaire 18 comprend en outre un tube formant canalisation 32 qui s'étend selon un axe parallèle à l'axe de la pièce intermédiaire 18 et décalé radialement de façon que ledit axe soit sécant avec la portion radiale inférieure 9. La canalisation 32 est en communication directe avec la canalisation 30 à son extrémité supérieure et est ouverte à son extrémité inférieure. A l'état monté, la canalisation 32 s'étend jusqu'à proximité de ou en contact sans obturation avec la portion radiale 9 du deuxième récipient 6. Les parois cylindriques 19 et 20, la jupe 21, le goulot 23, la paroi radiale 26, la portion cylindrique 27 et la portion de fond 28 sont coaxiales.

Le dispositif comprend encore une pompe 33 visible sur la figure 1, de type classique, comprenant une paroi extérieure 34 qui est vissée sur le goulot de la pièce intermédiaire 18, un bouton-poussoir 35 disposé au-dessus de la paroi extérieure 34, le bouton-poussoir 35 étant apte à être déplacé axialement vers le bas pour provoquer le pompage, et un tube de prélèvement 36. Le bouton-poussoir 35 est pourvu d'une buse de projection 37. A l'état monté, le tube de prélèvement 36 vient s'emmancher dans l'extrémité supérieure de l'alésage de la portion cylindrique 27 de la pièce intermédiaire 18. La pompe 33 est de type doseuse en ce sens que chaque déplacement axial du bouton-poussoir 35 provoque le pompage par l'intermédiaire du tube 36 d'une quantité déterminée de liquide, par exemple 0,15 cm³.

Le fonctionnement du dispositif est le suivant. L'utilisateur exerce une pression radiale sur la paroi latérale 2 du premier récipient 1 qui est au moins partiellement rempli de liquide. Cette pression provoque une réduction du volume disponible pour le liquide dans le premier récipient 1 et une remontée de liquide par le tube 14 dans l'espace 17 du second récipient 6. Le second récipient 6 sera avantageusement réalisé en matériau synthétique transparent ou à tout le moins translucide, permettant à l'utilisateur de voir le niveau de liquide présent dans ledit espace 17. Une graduation peut également être prévue, permettant une estimation de la quantité de liquide présente dans ledit espace 17.

Si l'utilisateur souhaite n'utiliser qu'une faible quantité de liquide, il pourra arrêter de presser le premier récipient 1 lorsque la graduation correspondant à la quantité désirée est atteinte. Au contraire, si l'utilisateur souhaite utiliser une dose maximale, il exerce une pression jusqu'à ce que l'ensemble de l'espace 17 limité vers le haut par la pièce intermédiaire 18 soit rempli de liquide. Lorsque l'utilisateur cesse d'exercer une pression sur la paroi latérale 2 du premier récipient 1, le niveau de liquide dans l'espace 17 est situé au-dessus du trou 16 de la portion radiale d'extrémité 15. La partie de liquide disposée au-dessus de ce niveau redescend dans le premier récipient 1 par le tube 14. La quantité maximale de liquide dosé est donc égale au volume de l'espace 17 limité vers le haut par le plan de la portion radiale 15. A titre d'exemple, on peut prévoir une dose de 6 cm³.

L'utilisateur actionne alors la pompe 33 en poussant axialement le bouton 35 vers le bas, ce qui provoque à chaque poussée le pompage d'une quantité de liquide déterminé par les caractéristiques internes de la pompe 33, par exemple 0,15 cm³. La pompe 33 provoque une aspiration dans le tube de prélèvement 36, ce qui provoque le passage du liquide présent dans l'espace 17 par la canalisation 32, la canalisation 30 et l'espace cylindrique formant également une canalisation et délimité par la portion cylindrique 27 de la pièce intermédiaire 18, puis dans le tube de prélèvement 36. L'utilisateur actionne la pompe 33 jusqu'à l'aspiration complète du liquide présent dans l'espace 17 du deuxième récipient 6. Ainsi, sans avoir à compter le nombre de poussées exercées sur le bouton 35 de la pompe 33, l'utilisateur maîtrise parfaitement la quantité totale de liquide pompé qui est égale à la quantité présente dans l'espace 17 immédiatement avant le premier actionnement de la pompe 33.

La pièce intermédiaire 18 avec la canalisation décalée 32 permet un montage du premier récipient 1, du deuxième récipient 6, de la pièce intermédiaire 18 et de la pompe 33 selon un axe commun, ce qui présente des avantages en termes de compacité dans le sens radial, de facilité de préhension par l'utilisateur et d'utilisation d'éléments standards tel que le premier récipient 1 et la pompe 33. Une grande compacité dans le sens axial est également obtenue. On voit sur la figure 1 que la distance axiale séparant l'extrémité inférieure de la pompe 33 et l'extrémité supérieure du premier récipient 1 est faible, et qu'à un même niveau axial se trouvent la canalisation 32 de la pièce intermédiaire 18, le moyen de dosage du second récipient 6 qui est formé par la partie inférieure de l'espace 17 et le goulot 5 du premier récipient.

La pompe 33 sera du type atmosphérique, c'est-à-dire avec une mise à la pression atmosphérique de l'espace situé entre le tube de prélèvement 36 et la paroi extérieure 34 en fin de course du bouton 35, cet espace étant en communication directe avec l'espace 25 de la pièce intermédiaire 18, lui-même en communication directe avec l'espace 17 du deuxième récipient 6 grâce aux trous 29 prévus dans la paroi radiale 26, l'espace 17 étant également en communication directe avec l'intérieur du premier récipient 1 par l'intermédiaire du tube 14. On permet ainsi une entrée d'air progressive à l'intérieur du dispositif lors du pompage.

La pièce intermédiaire 18 peut être réalisée par moulage d'une seule pièce en utilisant un matériau de rigidité moyenne tel qu'un thermoplastique élastomère, par exemple du Santoprène ®, ou un polymère plastifié tel que du PVC.

Le dispositif selon la présente invention peut être destiné à l'application de produit de traitement sur la chevelure d'un patient. On peut ainsi répartir de façon régulière sur la chevelure une quantité totale déterminée d'un produit de traitement.

## Revendications

1. Dispositif de stockage et de distribution de liquide, comportant un premier récipient (1) d'une première contenance, un deuxième récipient (6) d'une deuxième contenance inférieure à la première et comprenant une portion inférieure distante d'une paroi de fond (3) du premier récipient, un moyen apte à transférer du liquide du premier récipient vers le deuxième récipient et une pompe (33) en communication avec le deuxième récipient pour prélèvement d'une quantité déterminée de liquide dans le dit deuxième récipient et distribution à l'extérieur, **caractérisé par le fait que** ladite deuxième contenance est déterminée par la disposition des parois du deuxième récipient, et que le moyen apte à transférer du liquide du premier récipient vers le deuxième récipient est un moyen apte à transférer du liquide du premier récipient vers le deuxième récipient en position tête en haut.

2. Dispositif de stockage selon la revendication 1, **caractérisé en ce que** le premier récipient est apte, notamment en réponse à une pression exercée sur la paroi du premier récipient, à passer d'un volume maximum à un volume minimum, la surpression générée par la réduction du volume correspondant provoquant le transfert de liquide du premier récipient vers le second récipient.

3. Dispositif selon la revendication 1 ou 2, **caractérisé par le fait que** la pompe comprend un bouton-poussoir (35) dont l'actionnement entraîne le pompage de ladite quantité déterminée de liquide.

4. Dispositif selon l'une quelconque des revendications précédentes, **caractérisé par le fait que** le premier récipient comprend un goulot (5), le deuxième récipient étant monté axialement sur ledit goulot.

5. Dispositif selon la revendication 4, **caractérisé par le fait que** le moyen de transfert comprend un tube (14) s'étendant depuis le fond du premier récipient jusqu'à un niveau donné du dit deuxième récipient, déterminant la deuxième contenance, le surplus de liquide contenu dans le deuxième récipient pouvant s'écouler par le tube vers le premier récipient.

6. Dispositif selon l'une quelconque des revendications précédentes, **caractérisé par le fait qu'**il comprend une pièce intermédiaire (18) disposée entre le deuxième récipient et la pompe, de façon que le deuxième récipient et la pompe soient coaxiaux.

7. Dispositif selon la revendication 6, **caractérisé par le fait que** la pièce intermédiaire comprend une canalisation en trois portions, une première portion (32) dont l'extrémité libre débouche dans le fond du deuxième récipient, la première portion traversant le deuxième récipient et étant décalée par rapport à l'axe de ladite pièce et du deuxième récipient, une deuxième portion radiale (30) en communication avec une troisième portion (27), coaxiale avec la pompe et le deuxième récipient et dans laquelle est emmanché un tube-collecteur (36) de la pompe.

8. Dispositif selon la revendication 7, **caractérisé par le fait que** la deuxième portion radiale s'étend au voisinage d'une extrémité du deuxième récipient opposée audit fond.

9. Dispositif selon l'une quelconque des revendications 5 à 8, **caractérisé par le fait que** le tube (14) débouche au centre du deuxième récipient.

## Claims

1. A liquid storage and dispensing device, including a first container (1) having a first capacity, a second container (6) having a second capacity less than the first capacity and including a lower portion at a distance from a bottom wall (3) of the first container, means capable of transferring liquid from the first container towards the second container, and a pump (33) communicating with the second container for taking a particular quantity of liquid from said second container and dispensing it, **characterized in that** said second capacity is determined by the arrangement of the walls of the second container, and **in that** the means capable of transferring liquid from the first container towards the second container is a means capable of transferring liquid from the first container towards the second container in the upright position.

2. A storage device according to claim 1, **characterized in that** the first container is adapted, in particular in response to pressure applied to the wall of the first container, to change from a maximum volume to a minimum volume, positive pressure generated by the corresponding reduction in volume causing liquid to be transferred from the first container towards the second container.

3. A device according to claim 1 or claim 2, **characterized in that** the pump includes a pushbutton (35) which is actuated to pump said particular quantity of liquid.

4. A device according to any preceding claim, **characterized in that** the first container has a neck (5) and the second container is mounted axially on said neck.

5. A device according to claim 4, **characterized in that** the transfer means include a tube (14) extending from the bottom of the first container to a given level of said second container defining the second capacity, surplus liquid in the second container being able to flow through the tube towards the first container.

6. A device according to any preceding claim, **characterized in that** it includes an intermediate part (18) disposed between the second container and the pump and the second container and the pump are coaxial.

7. A device according to claim 6, **characterized in that** the intermediate part includes a three-portion pipe which has a first portion (32), whose free end opens into the bottom of the second container and which passes through the second container and is offset relative to the axis of said part and the second container, a radial second portion (30) communicating with a third portion (27), coaxial with the pump and the second container and into which a suction tube (36) of the pump is force-fitted.

8. A device according to claim 7, **characterized in that** the radial second portion extends to the vicinity of an end of the second container opposite said bottom.

9. A device according to any of claims 5 to 8, **characterized in that** the tube (14) discharges at the centre of the second container.

## Patentansprüche

1. Vorrichtung zum Aufbewahren und Verteilen von Flüssigkeit mit einem ersten Behälter (1) mit einem ersten Fassungsraum, mit einem zweiten Behälter (6) mit einem zweiten Fassungsraum, der kleiner ist als der erste und der einen unteren Teil besitzt, der mit Abstand von einer Bodenwand (3) des ersten Behälters angeordnet ist, mit einer Einrichtung, die geeignet ist, die Flüssigkeit vom ersten Behälter in den zweiten Behälter zu übertragen und mit einer Pumpe (33), die mit dem zweiten Behalter zur Entnahme einer vorbestimmten Flüssigkeitsmenge in den besagten zweiten Behälter und zum Ausgeben nach Außen in Verbindung steht, **dadurch gekennzeichnet, dass** der besagte zweite Fassungsraum durch die Anordnung von Wänden des zweiten Behälters abgegrenzt ist, und dass die Einrichtung, die geeignet ist Flüssigkeit aus dem ersten Behälter in den zweiten Behälter zu übertragen, eine Einrichtung ist, die geeignet ist Flüssigkeit vom ersten Behälter in den zweiten Behälter bei aufrechter Lage zu übertragen.

2. Vorrichtung zum Aufbewahren nach Anspruch 1, **dadurch gekennzeichnet, dass** der erste Behälter geeignet ist, insbesondere unter der Wirkung von auf die Wand des ersten Behälters ausgeubtem Druck von einem maximalen Volumen zu einem minimalen Volumen überzugehen, wobei der durch die Verringerung des entsprechenden Volumens erzeugte Überdruck die Übertragung von Flüssigkeit aus dem ersten Behälter in den zweiten Behälter auslöst.

3. Vorrichtung nach Anspruch 1 oder 2, **dadurch gekennzeichnet, dass** die Pumpe einen Druckknopf (35) aufweist, dessen Betätigung das Pumpen der besagten festgelegten Menge von Flüssigkeit bewirkt.

4. Vorrichtung nach einem der vorhergehenden Ansprüche, **dadurch gekennzeichnet, dass** der erste Behälter einen (engen Flaschen)Hals (5) aufweist, und dass der zweite Behälter auf diesem Hals axial montiert ist.

5. Vorrichtung nach Anspruch 4, **dadurch gekennzeichnet, dass** die Einrichtung zum Übertragen ein Rohr (14) aufweist, das sich vom Boden des ersten Behälters bis zu einem gegebenen Niveau des besagten zweiten Behälters erstreckt, und dabei den zweiten Fassungsraum bestimmt, wobei der im zweiten Behälter enthaltene Überschuss an Flüssigkeit durch das Rohr in den ersten Behälter strömen kann.

6. Vorrichtung nach einem der vorhergehenden Ansprüche, **dadurch gekennzeichnet, dass** sie ein Zwischenstück (18) aufweist, das zwischen dem zweiten Behälter und der Pumpe angeordnet ist, derart, dass der zweite Behälter und die Pumpe koaxial sind.

7. Vorrichtung nach Anspruch 6, **dadurch gekennzeichnet, dass** das Zwischenstück einen Kanal aus drei Teilen umfasst, einen ersten Teil (32), dessen freies Ende im Boden des zweiten Behälters ausmündet, wobei der erste Teil den zweiten Behälter durchsetzt und bezüglich der Achse des genannten Stückes und des zweiten Behälters versetzt ist, einen zweiten, radialen Teil (30) in Verbindung mit einem dritten Teil (27), der koaxial zur Pumpe und zu dem zweiten Behälter ist, und an dem ein Sammelrohr (36) der Pumpe angesetzt ist.

8. Vorrichtung nach Anspruch 7, **dadurch gekennzeichnet, dass** der zweite radiale Teil sich in der Nähe eines Endes des zweiten Behälters, das dem Boden gegenüber liegt, angeordnet ist.

9. Vorrichtung nach einem der Ansprüche 5 bis 8, **dadurch gekennzeichnet, dass** das Rohr (14) in der Mitte des zweiten Behälters mündet.
